# EUROPEAN PATENT SPECIFICATION

(11) **EP 0 477 936 B1**
(45) Date of publication and mention of the grant of the patent: **04.12.1996**
(21) Application number: 91116437.4
(22) Date of filing: 26.09.1991
(51) Int. Cl.: H01F 3/14, H01F 3/04, H01F 27/26

(54) **Method of reducing noise in magnetic core**
Verfahren zur Geräuschverminderung in einem Magnetkern
Procédé pour réduire le bruit dans un noyau magnétique

(30) Priority: 01.11.1990 JP 296566/90; 28.09.1990 JP 261963/90; 28.09.1990 JP 261962/90
(43) Date of publication of application: 01.04.1992
(60) Divisional application: 95109531.4
(73) Proprietor: MITSUI PETROCHEMICAL INDUSTRIES, LTD., Tokyo (JP)
(72) Inventor: Hitoshi, Saito, c/o MITSUI PETROCHEM. IND., LTD., Sodegaura-shi, Chiba (JP); Hiroshi, Watanabe, c/o MITSUI PETROCHEM. IND., LTD, Sodegaura-shi, Chiba (JP); Kazuyoshi, Kitazawa, c/o MITSUI PETROCHEM. IND.LTD, Sodegaura-shi, Chiba (JP)
(74) Representative: Lehn, Werner, Dipl.-Ing.

(56) References cited:
- DE-A- 2 225 090
- FR-A- 2 223 800
- GB-A- 1 052 593
- GB-A- 2 138 215
- US-A- 3 290 635
- PATENT ABSTRACTS OF JAPAN vol. 8, no. 272 (E-284)13 December 1984

## Description

### BACKGROUND OF THE INVENTION

### Field of the invention

In general, a magnetic core therearound is well known to cause a certain vibration if its load current is periodically turned on or off as found in a choke coil of a switching power supply. If this switching frequency is within the range of audible frequency, this vibration may cause a noise and this noise transmit around the parts and then the parts are vibrated to deteriorate an operating characteristic of each of the parts.

The aforesaid phenomenon of generating sound shows a problem that a magnetic core having a high inductance in respect to a low DC bias current and in turn having a low Inductance in respect to a high DC bias current, i.e. a circuit having a rational characteristic as a choke coil for a switching power supply shows a large noise and there is a contradiction between a performance and noise.

In turn, in case of a magnetic core, it is possible to get a desired performance by forming a slit or a gap in response to a particular application of arranging a choke coil or the like. However, if the magnetic core is formed with a slit of a gap, its mechanical strength is reduced, resulting in that its resonance state way easily occur and so it may not be avoidable to increase noise as well as vibration.

### Description of the Prior Art

In view of the above, in order to reduce noise, there is provided a system in which a part near the gap in the magnetic core is fixed (see Publication JP-A-61-55242). However, in case of the magnetic core having a part near the gap fixed, there is a certain disturbance in an effect of reducing noise in reference to its- mechanical fixing strength and further noise generated near the gap is restricted afterwards, so that there is a certain limitation in its effect.

Publication JP-A-59-144113 shows a view in which the upper, inner or outer surface of an annular magnetic core is formed with a slit so that the core is cut up to about 80% of the cross-sectional area, and the remaining 20% is not cut but remains. This prior art forms cut portions at each of the locations in the magnetic core in order to improve a magnetic characteristic (an inductance/biased DC current value) of the magnetic core, has no description concerning the reduction of noise and this prior art is different from the present invention reducing noise.

### SUMMARY OF THE INVENTION

In view of the foregoing, the present invention has been done and it is an object of the present invention to provide a method of reducing noise in a magnetic core

The method of reducing noise of a magnetic core according to the present invention in which the core is annular in its form, its sectional shape is rectangular, it has an outer circumferential surface and an inner circumferential surface, and it has a first side surface (upper surface) connecting one of the edges of these outer circumferential surface and inner circumferential surface and a second side surface (lower surface) connecting the other edges of the outer circumferential surface and the inner circumferential surface, which comprises forming a slit groove entering into the opposing surface direction at either one of the inner circumferential surface, the first side surface and the second side surface, as specified in claim 1.

The present invention will be described in more detail as follows, wherein the method will be described together with the magnetic core.

### Method for Reducing Noise of Magnetic Core

The slit groove in this magnetic core is in the range of 20% to 80% of all sectional area, preferably 40% to 75% in view of reducing noise. In addition, the width of the slit groove is preferably 0.2 to 2 mm or so.

In this connection, the aforesaid magnetic core can be constructed by winding an amorphous magnetic alloy ribbon.

As amorphous magnetic alloys, there are some Fe alloy system of Fe-B, Fe-B-C, Fe-B-Si, Fe-B-Si-C, Fe-B-Si-Cr, Fe-Co-B-Si and Fe-Ni-Mo-B or the like and Co-system of Co-B, Co-Fe-Si-B, Co-Fe-Ni-Mo-B-Si, Co-Fe-Ni-B-Si, Co-Fe-Mn-B-Si, Co-Fe-Mn-Ni, Co-Mn-Ni-B-Si, and Co-Fe-Mn-Ni-B or the like.

In addition, other than the amorphous magnetic alloy, Fe based nanocrystalline soft magnetic material such as Fe-Si-B-Cu-Nb alloy can be used.

The present inventors have analyzed how a noise of the magnetic core is generated and then the following matters have been made apparent. That is, a noise level of the magnetic core is increased as a magnetic flux density to be excited is higher.

Although a value of magnetic flux density is increased more as magnetic field applied to the magnetic core is increased, a value of the magnetic field is in reverse proportional to a distance from the center of the magnetic core, so that its value is increased more at the inner side of the magnetic core under a condition in which no gap is present.

Due to this fact, in case of forming the gap, the part where the magnetic flux density is increased without any gap there, i.e. the inside of the magnetic core is preferably formed with a gap. In addition, at least one of the side surface of the first and second side surface of the annular magnetic core is cut to show an effect that a concentration of the magnetic flux can be restricted. In addition, as compared with that of the core having a full width gap, its mechanical strength is increased, so that a restriction of resonance can be attained. Since a resonance frequency is also increased, a response in the range of audible sound is reduced and this is effective in view of preventing noise.

The formation of the groove at the first side surface of the annular magnetic core enables noise to be reduced at maximum of 12 dB. This has been effective for such a magnetic core in which its inner and outer diameter ratio is high and a magnetic flux may easily be concentrated inside the magnetic core.

### BRIEF DESCRIPTION OF THE DRAWINGS

Fig. 1 to 5 illustrate a preferred embodiment concerning the method of the present invention and the magnetic core;
Fig. 1 is a perspective view of for showing the first embodiment.
Fig. 2 is a perspective view for showing the second embodiment.
Fig. 3 is a graph for showing a relation between a magnetic flux at a frequency of 10 KHz and a sound pressure level under an excitation of a multiplexed sinusoidal wave (an output voltage is constant at a frequency range of 1 to 20 KHz).
Fig. 4 is a graph for showing a relation between a magnetic flux density and a produced sound level, of which unit is dB (flat characteristic), at a frequency of 5 KHz when a sinusoidal wave is excited at an exciting frequency of 5 KHz.
Fig. 5 is a graph for showing a relation between a magnetic flux density and a produced sound level at a frequency of 10 KHz under a sinusoidal excitation at an exciting frequency of 5 KHz.

### DESCRIPTION OF THE PREFERRED EMBODIMENTS

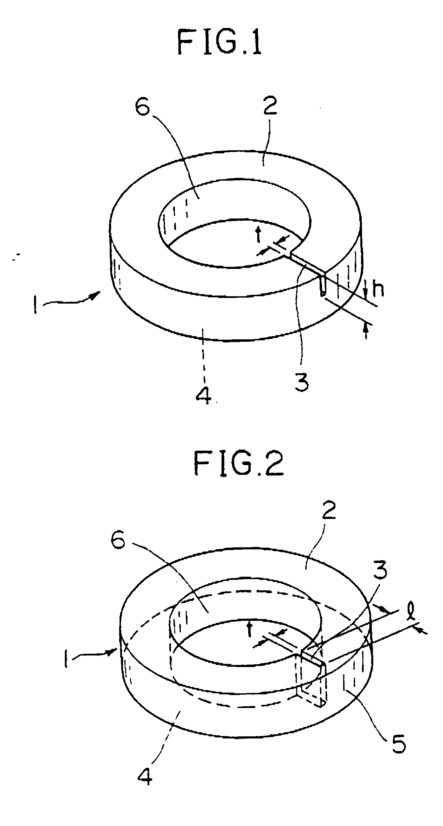

Referring now to Figs. 1 to 5, some embodiments of the present invention will be described. Embodiments 1 and 2 relate to a method of reducing noise in a magnetic core and the magnetic core.

### Embodiment 1

Referring now to Fig. 1, the first embodiment of the present invention will be described.

A magnetic core 1 is made such that a thin ribbon of amorphous magnetic metal Fe₇₈Si₉B₁₃ (atom %) is wound, resulting in that an annular core with an outer diameter of 25 mm, an inner diameter of 15 mm and a thickness from an upper surface to a lower surface of 10 mm is formed. Its sectional shape is rectangular and has an outer circumferential surface 5 and an inner circumferential surface 6, and further it has a first side surface (upper surface) 2 connecting one edge of each of these outer circumferential surface 5 and inner circumferential surface 6 and a second side surface (lower surface) 4 for connecting each of the other edges of the outer circumferential surface 5 and the inner circumferential surface 6. The first side surface 2 and the second side surface 4 of the magnetic core I are planer in their forms. The outer circumferential surface 5 and the inner circumferential surface 6 are circle in their forms. The first side surface (upper surface) 2 is formed with a slit groove 3 entering toward the second side surface 4. One slit groove 3 is formed on the circumference, the depth (h) of the slit groove 3 is 6 mm and its width (t) is 0.8 mm. With such an arrangement, an area of the cut portion occupies 60 % of all sectional areas,

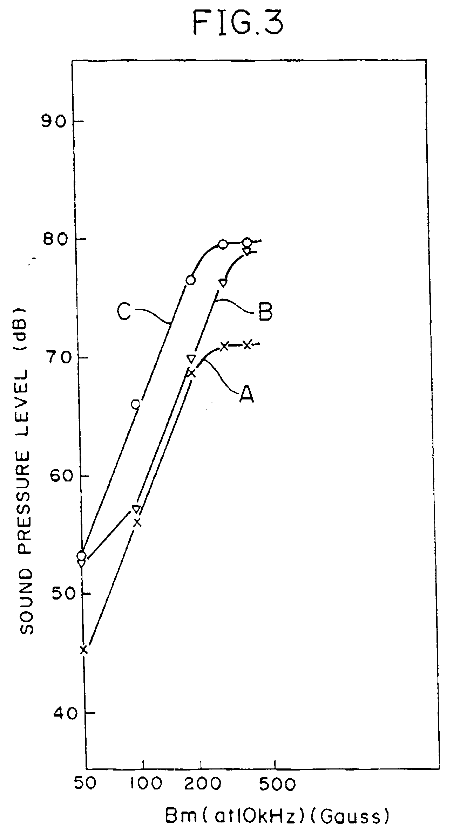

Referring now to Figs. 3 to 5, to results of experiments for measuring noise will be described.

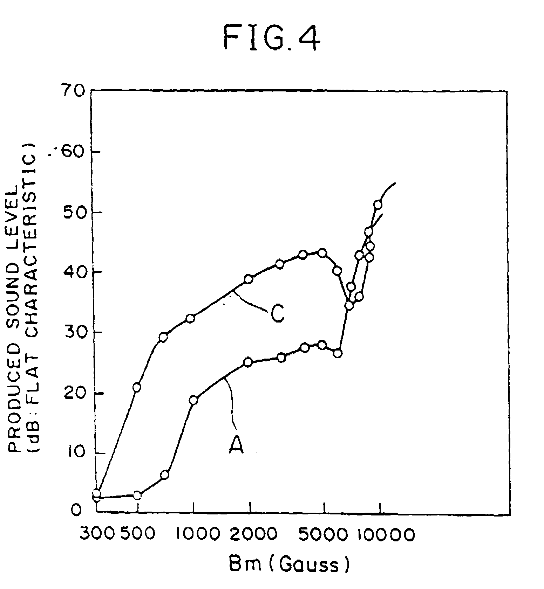

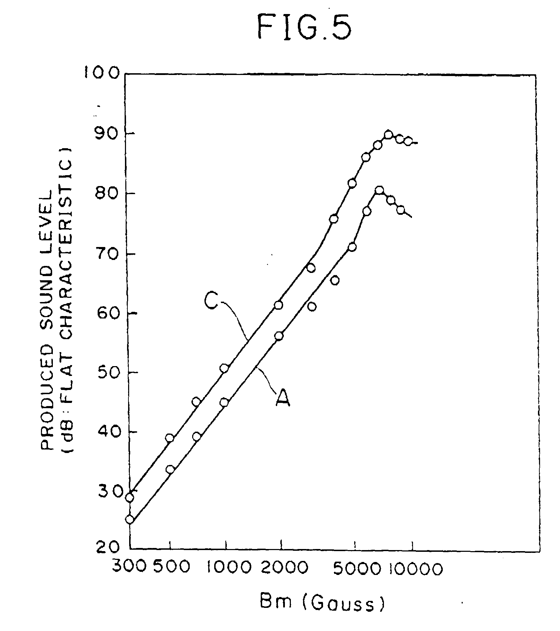

Fig. 3 is a graph for showing a relation between a magnetic flux density at a frequency of 10 KHzand a sound pressure level of noise when a excitation at a multiplex sinusoidal wave (an output voltage being constant at a frequency range of 1 to 20 KHz) is carried out. Fig. 4 is a graph for showing a produced sound level with a frequency of 5 KHz plotted in respect to an excitation frequency of 5 KHz. Fig. 5 is a graph for showing a frequency of 10 KHz in respect to an excitation frequency of 5KHz, i.e. for showing a produced sound level of the second harmonic wave. In any of the graphs, the magnetic core is applied as a non-linear choke.

In Fig. 3, A denotes the magnetic core 1 of the aforesaid embodiment, B denotes a magnetic core having no gap, and C denotes a trail magnetic core as a comparison sample in which the outer circumferential surface 5 of the magnetic core 1 is formed with a slit groove 3 having a depth of 3 mm and a width of 0.8 mm.

As apparent from this graph, the magnetic core A has at magnetic flux density of 300 Gauss or more a reduced noise of about 8 dB as compared with that of the magnetic core B and at the same time its noise is reduced substantially in proportion to a variation of a magnetic density at 100 Gauss or less. The magnetic core B not formed with any gap shows a non-linear relation at 100 Gauss or less and noise of 53 dB even at 50 Gauss is left. In case of the core C, noise is increased more than that of the core B.

In case of the experiment shown in Fig. 4, a noise characteristic at a fundamental wave is indicated, in which a comparison with the aforesaid sample C shows a reduction in noise of maximum value of 12 dB (at a magnetic flux density of 4000 Gauss).

Fig. 5 indicates a noise level at the second harmonic wave for each of the magnetic cores A and C and it is indicated that a noise reduction of mean 7 dB in magnetic flux density of 300 to 4000 Gauss.

### Embodiment 2

Referring now to Fig. 2, the second embodiment of the present invention will be described.

Although in the first embodiment, the slit groove 3 is formed from the first side surface to the second side surface of the magnetic core 1, the slit groove 3 in the second embodiment is formed from the inner circumferential surface 6 of the magnetic core 1 toward the outer circumferential surface up to a location of 1 = 3 mm from the inner circumferential surface at a width t= 0.8 mm, in which a sectional area of the groove is 60 % of the entire area.

Experiment similar to that of the first embodiment was carried out with the magnetic core 1 and a similar effect of reducing noise could be attained.

In brief, any one of the inner circumferential surface 6, the first side surface 2 and the second side surface 4 of the magnetic core 1 is partially formed with a slit groove 3 entering toward an opposite surface, resulting in that noise has been improved more than that not forming the slit groove 3.

In turn, in case of the core produced as a sample of comparison having a slit groove at the outer circumferential surface 5 of the magnetic core 1, it has been confirmed that a noise characteristic is deteriorated more than that having no slit groove 3.

## Claims

1. A method of reducing noise of a magnetic core having an annular form and being shaped to a rectangular section, said core having an outer circumferential surface (5) and an inner circumferential surface (6), a first side surface (2) for connecting one edge of said outer and inner circumferential surfaces (5, 6) and a second side surface (4) for connecting one edge of said outer and inner circumferential surface (5, 6) as well as a slit groove (3), **characterized** by reducing noise by providing said slit groove (3) so as to partially enter toward the opposed surface at at least one of said inner circumferential surface (6), said first side surface (2) and said second side surface (4), without entirely crossing said outer circumferential surface (5) in an axial direction, with a width ranging within about 0.2 to 2 mm, and with a rate of slit in the range of 20 to 80 % of all sectional areas.

2. The method according to claim 1, characterized by providing said slit groove (3) with a rate of slit in the range of 45 to 75 % of all sectional areas.

3. The method according to claim 2, characterized by providing said slit groove (3) with a rate of about 60 % of all sectional areas and with a width of about 0.8 mm.

4. The method according to any of the preceding claims, characterized by constructing the core by winding a ribbon made of one kind of material selected from an amorphous magnetic metal and an Fe-based noncrystalline soft magnetic material.

5. The method according to claim 4, characterized by constructing the core by winding a ribbon made of an amorphous magnetic metal.

## Patentansprüche

1. Verfahren zur Verringerung von Geräuschen eines Magnetkerns, der kreisringförmig ist und einen rechteckigen Querschnitt aufweist, wobei der Kern eine Außenumfangsoberfläche (5) und eine Innenumfangsoberfläche (6) aufweist, eine erste Seitenoberfläche (2) zum Verbinden einer Kante der äußeren und inneren Umfangsoberflächen (5, 6), und eine zweite Seitenoberfläche (4) zur Verbindung einer Kante der äußeren und inneren Umfangsoberfläche (5, 6), und eine Schlitznut (3) aufweist,
dadurch **gekennzeichnet**, daß Geräusche durch Bereitstellung der Schlitznut (3) verringert werden, die teilweise in Richtung auf die gegenüberliegende Oberfläche in zumindest entweder die Innenumfangsoberfläche (6), die erste Seitenoberfläche (2) oder die zweite Seitenoberfläche (4) hineinragt, ohne die Außenumfangsoberfläche (5) in Axialrichtung vollständig zu kreuzen, mit einer Breite im Bereich von etwa 0,2 bis 2 mm, und mit einer Schlitzrate im Bereich von 20 bis 80 % sämtlicher Schlitzflächen.

2. Verfahren nach Anspruch 1,
**gekennzeichnet** durch Bereitstellung der Schlitznut (3) mit einer Schlitzrate im Bereich von 45 bis 75 % sämtlicher Schnittflächen.

3. Verfahren nach Anspruch 2,
**gekennzeichnet** durch Bereitstellung der Schlitznut (3) mit einer Rate von etwa 60 % sämtlicher Schnittflächen und mit einer Breite von etwa 0,8 mm.

4. Verfahren nach einem der voranstehenden Ansprüche,
**gekennzeichnet** durch Aufbau des Kerns durch Wickeln eines Bandes, welches aus einer Art eines Materials besteht, das aus amorphem magnetischen Metall und einem nicht kristallinen, weichmagnetischen Material auf Basis von Fe ausgesucht ist.

5. Verfahren nach Anspruch 4;
**gekennzeichnet** durch Aufbau des Kerns durch Wickeln eines Bandes, welches aus einem amorphen magnetischen Metall besteht.

## Revendications

1. Procédé de réduction du bruit d'un noyau magnétique ayant une forme annulaire et étant façonné suivant une section rectangulaire, ledit noyau ayant une surface circonférentielle extérieure (5) et une surface circonférentielle intérieure (6), une première surface latérale (2) pour relier un bord desdites surfaces circonférentielles intérieure et extérieure (5, 6) et une seconde surface latérale (4) pour relier un bord desdites surfaces circonférentielles extérieure et intérieure (5, 6) ainsi qu'une rainure fendue (3), caractérisé par la réduction du bruit en fournissant ladite rainure fendue (3) de manière qu'elle entre partiellement dans la direction de la surface opposée au droit d'au moins l'une de ladite surface circonférentielle intérieure (6), de ladite première surface latérale (2) et de ladite seconde surface latérale (4), sans croiser entièrement ladite surface circonférentielle extérieure (5) dans la direction axiale, avec une largeur comprise dans la plage d'environ 0,2 à 2 mm, et avec un taux de la fente dans la plage de 20 à 80 % de l'aire en coupe totale.

2. Procédé selon la revendication 1, caractérisé par la fourniture de ladite rainure fendue (3) avec un taux de la fente dans la plage de 45 à 75 % de l'aire en coupe totale.

3. Procédé selon la revendication 2, caractérisé par la fourniture de ladite rainure fendue (3) avec un taux d'environ 60 % de l'aire en coupe totale et avec une largeur d'environ 0,8 mm.

4. Procédé selon l'une quelconque des revendications précédentes, caractérisé par le fait qu'on construit le noyau en enroulant un ruban constitué d'une sorte de matériau choisi parmi un métal magnétique amorphe et un matériau magnétique doux non cristallin à base de Fe.

5. Procédé selon la revendication 4, caractérisé par la construction du noyau en enroulant un ruban constitué d'un métal magnétique amorphe.
